# EUROPEAN PATENT APPLICATION

(11) **EP 1 681 627 A2**
(43) Date of publication of application: **19.07.2006**
(21) Application number: 06100205.1
(22) Date of filing: 10.01.2006
(51) Int. Cl.: G06F 9/44

(54) **Application object as primitive of operating system**

(30) Priority: 18.01.2005 US 37480
(71) Applicant: MICROSOFT CORPORATION, Redmond, Washington 98052-6399 (US)
(72) Inventor: Aghajanyan, Souren, Redmond, WA 98052 (US)
(74) Representative: Grünecker, Kinkeldey, Stockmair & Schwanhäusser Anwaltssozietät

(57) **Abstract**

Managing applications associated with an operating system. An application object is defined as a primitive of the operating system. An identity property of the application object identifies at least one application associated with the operating system and a metadata property of the application object declares behavioral characteristics of the identified application. An application state representative of a dynamic state of the identified application defines semantics of an interaction between the application object and the application state.

## Description

### TECHNICAL FIELD

Embodiments of the present invention relate to the field of application management. In particular, embodiments of the invention define an application object as a first class primitive of an operating system to provide an infrastructure for managing and servicing applications.

### BACKGROUND OF THE INVENTION

A conventional operating system provides a set of services for abstracting hardware and managing resources. Elementary application programming interfaces, for example, direct the operating system to expose memory, files, networking, and the like. By generalizing commonly used abstractions through these APIs, the operating system enables others to build interesting works of software. But the operating system does not "control" associated applications. In other words, the operating system generally allows an application to do whatever it wants, within the limits of user security and system policy, and the application does not describe its boundaries in any respect (e.g., either physical or behavioral) to the operating system. Unfortunately, a faulty, uncontrolled application can "break" the operating system and lead to significant system instability. This sometimes forces a user to reinstall the operating system to regain a stable and usable system.

An application's failure to follow the operating system's rules also causes system instability. Because it is free to break the rules, an application may become commingled with the operating system. Similarly, shared settings and cross-dependencies are common between an application and the operating system. As a result, these settings may be even more commingled than the binary files. In other words, conventional operating systems allow applications to do too much and they cannot effectively enforce the undefined boundaries between an operating system and a relatively unmonitored and unrestricted application on a per-application basis.

Unfortunately, there is no deterministic approach for analyzing system applications to identify if a binary belongs to the operating system or to a particular application. Likewise, there is no deterministic approach for separating state between the operating system and the application. These problems are complicated by a lack of semantical separations in a conventional operating system and lead to an inability to effectively track application changes and the like that can affect the operating system or other applications. All of these factors create tremendous complexity in managing the operating system and, thus, hinder upgrades, migration, backups, and roaming and increase the likelihood of system instability.

Moreover, solutions that attempt to separate state are very complicated, non-deterministic, and based on a number of diverse heuristics. It is nearly impossible to correctly identify all installed applications and to assign them unique identifiers in the context of a conventional operating system. Similarly, attempting to ensure application compatibility by hooking APIs throughout the operating system is cumbersome and ineffective. One after-the-fact attempt at solving these problems includes designating certain operating system files as important and then attempting to restore the altered binaries when these "important" files are modified, accidentally or otherwise.

In light of the foregoing, improvements in deterministically analyzing and monitoring system applications are desired, which will reduce consumer anxiety for upgrades, migrations, roaming and the like.

### SUMMARY OF THE INVENTION

Embodiments of the invention overcome one or more deficiencies in the prior art by defining an application as a logical object with respect to an operating system. Advantageously, establishing an application object design as a first class primitive provides the infrastructure to enable scenarios that improve security, manageability, total cost of ownership, and the like.

For example, embodiments of the invention facilitate application migration between computers while maintaining the application's state (i.e., its settings). Aspects of the present invention permit migration of applications independent of licensing and version and even between applications from the same class in the case of different applications that have similar functions. In addition, embodiments of the invention simplify mobile computing and roaming and provide adaptive security for applications.

In one embodiment, a method of managing one or more applications associated with an operating system includes defining an application object as a primitive of the operating system. The method also includes identifying at least one of the applications with an identity property of the application object and declaring behavioral characteristics of the identified application with a metadata property of the application object.

Computer-readable media embodying aspects of the invention includes an identity property of an application object, which is a primitive of an operating system, and a metadata property of the application object. The identity property identifies at least one application associated with the operating system and the metadata property declares behavioral characteristics of the identified application. The computer-readable media also includes an application state representative of a dynamic state of the identified application.

In yet another embodiment, a method of managing one or more applications associated with an operating system includes defining an application object as a primitive of the operating system and identifying at least one of the applications with an identity property of the application object. The method also includes defining an application state representative of a dynamic state of the identified application. In this instance, the application state defines semantics of an interaction between the application object and the application state.

Computer-readable media having computer-executable instructions for performing a method of managing applications embody further aspects of the invention.

Alternatively, embodiments of the invention may comprise various other methods and apparatuses.

Other features will be in part apparent and in part pointed out hereinafter.

### BRIEF DESCRIPTION OF THE DRAWINGS

FIG. 1 is a block diagram illustrating an exemplary application abstraction according to one embodiment of the invention.

FIG. 2 is a flow diagram illustrating exemplary process flow according to one embodiment of the invention for managing application for an operating system.

FIG. 3 is a block diagram illustrating an exemplary embodiment of a suitable computing system environment in which one embodiment of the invention may be implemented.

Corresponding reference characters indicate corresponding parts throughout the drawings.

### DETAILED DESCRIPTION OF THE INVENTION

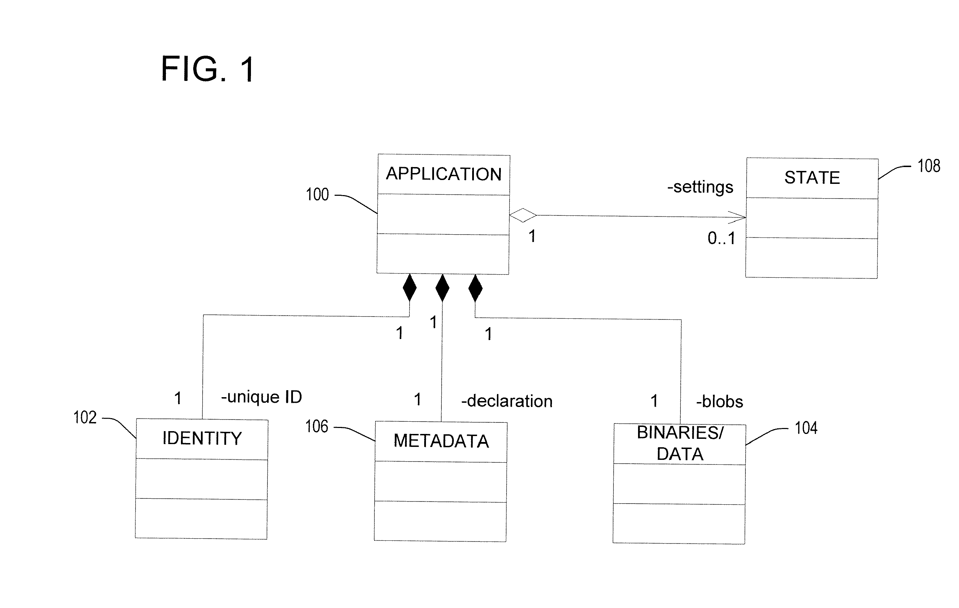

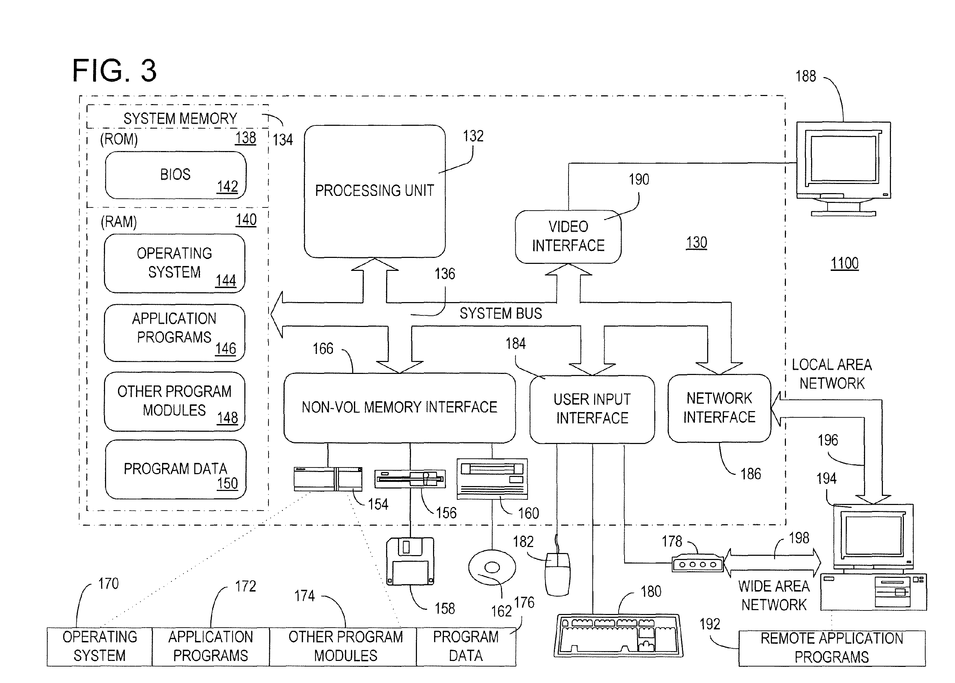

Referring further to the drawings, FIG. 1 shows an exemplary application abstraction according to embodiments of the invention. As shown, an application object 100 comprises four items, namely, an identity property 102, an executables\data property 104, a metadata property 106, and an application state 108. In one embodiment, the application object 100 is a first class primitive of an operating system (see FIG.3). In other words, each application associated with the operating system is treated as a logical object. This provides an infrastructure for enabling scenarios that improve security, manageability, total cost of ownership, and the like.

As described above, the operating system can provide a set of services for abstracting hardware and managing resources. Elementary application programming interfaces, for example, direct the operating system to expose memory, files, networking, and the like. In this regard, the operating system acts as a tool kit for which more complex and more strictly structured abstractions are built. Aspects of the present invention involve considering the operating system as an environment where applications live and transform. That is, operating system design centers on the lifecycle of an application. From this perspective, the operating system manages services rather than merely offering uncontrolled services. The operating system employing aspects of the invention continues to provide generality, but also offers management protocols to solve emerged problems such as manageability, portability, and security.

Re-orienting the operating system according to embodiments of the invention supports relatively complex abstractions at the operating system's base level. This assumes a deviation from conventional horizontal representation of elementary operating system objects toward operating system abstractions that have arbitrary hierarchical compositions. As such, conventional operating system design does not define an application as a separate and unambiguous essence. It does not even outline its boundaries. And while the core of the conventional operating system has many controls over the system, it does not have per-application control. Advantageously, , the invention provides a natural way to decrease and control operating system complexity.

In FIG. 1, the identity property 102 uniquely identifies an application in, for example, a global application namespace. Identity property 102 plays the same role for application object 100 as, for example, a globally unique identifier (GUID) plays for the COM object space. Although application identity property 102 may be a relatively elementary concept, it is very important because without it most of application- and state-based scenarios (e.g., migration, roaming, and backing up) would not be feasible. The identity property 102 acts as the glue that brings together different pieces of the application abstraction, i.e., application object 100. In other words, identity property 102 identifies what application object 100 is associated with particular state, which in turn enables new technologies and scenarios.

The metadata property 106 in this embodiment contains static information associated with an identified application and represents a declaration of different behavioral aspects of the application. For example, metadata property 106 represents a manifest of an application's declaration of intentions, minimum and maximum requirements of the operating system, actual services of the operating system, etc. The executables/data property 104 likewise contains static information. In this instance executables/data property 104 contains physical static data representative of an identified application's essential elements, i.e., the application's binaries. In one embodiment, a subset of the binaries is an entry point for application execution.

Referring further to FIG. 1, embodiments of the invention define the application state 108, which is representative of a dynamic state (or settings) of the identified application. In this instance application state 108 defines semantics of an interaction between application object 100 and application state 108. Of course, the state, or settings, may change during the lifetime of application object 100. Application state 100 defines notions of state separation, state object model, state consistency, and object model transformation, which enable complete scenarios such as migration, roaming, and backup.

Referring further to the metadata property 106 of application object 100, embodiments of the invention maintain static and vital information accompanying application object 100 in metadata property 106. Metadata property 106 is the connecting link between elements of application object 100 and the carrier of semantic meaning of application object 100 which also governs all functional aspects of application object 100 and its behavior. In one embodiment, the content of metadata property 106 is defined as an initial application state 108 template; application-based security, application behavior declaration, application properties, and application extensibility sections. FIG. 1 represents a computer-readable medium embodying aspects of the invention including, among other things, identity property 102, metadata property 106, and application state 108.

A difference between deterministic systems and other systems is that a deterministic system has strict notions and laws, where all phenomena and its aspects are limited by capabilities of the system and can be described in terms of that system. An operating system is a deterministic system and, hence, it has its own notions and rules where every occurring phenomena in the operating system may be restricted by capabilities of the operating system and can be described in terms of operating system. Here we are interested in the behavioral aspect of applications, which can be described in terms of the operating system. Those terms are operating system resources and operating system services (like file, socket, etc) or any other abstraction supported natively by the operating system.

Application interacts in environment that complies with laws of the operating system. The behavioral aspect of an application, by definition, has to comply with laws of the operating system, be limited by the capabilities of the operating system and can be described in terms of the operating system. The level of detail that the operating system rules and laws have depends on current needs of the identified application. For example, one possible definition for a generic term can be minimal and maximal requirements to operating system for different type of objects (e.g., Application A needs RAM 10-50MB DISK 10-50MB and CPU 10%).

Broad aspects can be described in minimal and maximal requirements in order to squeeze range of the operating system terms, yet still the identified application can work just fine. Those terms may be broad but are still very important. The minimal requirement term can be vital to make a decision to deploy or execute an application. An upper limit term is important to prevent Denial-of-Service situations. The operating system defines and enforces those terms, provides complete infrastructure for terms definition and realization.

On the opposite extreme, the operating system can define very detailed terms, like a time dependency between the operating system events and event sequence verification.

Behavioral terms of operating system objects, can be, for example: mass storages (quota on capacity, minimum bandwidth, maximum bandwidth); Networking (firewall, QOS, maximum bandwidth MB/sec); Process (number of threads, threads priority range, remote threads); scheduling (reserved processor usage %, priorities); memory (working set, continuous block allocation size).

Detailed and broad terms of the operating system are not mutually exclusive, but rather compliment each other and provide the client with a simplified model that can satisfy most applications needs. Aspects of behavior can be defined in broad terms or detailed terms depending on the level of interest.

The concept of behavioral declaration is independent and can be used in number of scenarios, such as scheduling optimizations, distributive application scheduling, install time formal verification of requirements, and runtime enforcement of behavioral declarations.

The set of terms defined by the operating system and used for application behavior declaration form a basis for application policies. Using terms creates a very flexible base for application management. And adding support of an application identity property 102 to application management makes it even more flexible. For example, a user may assign very strict rules for application A, which the user got from download.com, including disabling networking for that application, in case it is spyware. In another example, Company A finds out that Application B has a flaw. While the flaw is under investigation, company A may revoke application B's security policy or tighten it up, which would prevent the application flaw from exploitation, but will have limited functionality, until the problem can be determined and the client will get a fix.

Declarative behavior of application object 108 allows the operating system to foresee resource and service conflicts before they occur and deterministically resolve conflict at any given moment of application execution. It also allows generalizing the Quality of Service concept used in networking protocols to the level of the application object 100 abstraction.

With respect to application state 108, the state of the identified application and the operating system tend to live in a single pot. There may be overlaps, and state of one application can be changed by other applications. Aspects of the invention establish application state 108 as separate and independent from application object 100 and the operating system. Application state 108 exists outside of application object 100 and its lifetime is independent from that of the operating system and that of the identified application itself. Access to application state 108 in one embodiment is through its associated application.

State of one application is separated from other applications, possibly even physically. Applications should not be able to access state of other applications. As in object-oriented design, an object should not access members of other objects directly. The application itself is responsible for its own state. If application object 100 wants access to application state 108 for any reason, application state 108 should present itself as an opaque object having a predefined set of responsibilities as integral non-dividing object. Only application object 100 that owns the particular state 108 has to be able to modify it. The reason for this is to maintain consistency of state.

Consistency of state may be determined by application logic. Application state 108 should exist as a separate entity, which application object 100 uses but does not own. The lifetime of application state 108 should not be dependent on lifetime of application object 100, and hence the consistency of application state 108 is determined by application state 108 itself, not by application object 100. That is, application object 100 and application state 108 have a well-defined interaction contract, defined in terms of application object state semantics. Such technology may include XSD plus a way to validate consistency not only for schema of data, but to validate consistency of data itself.

With respect to state semantic consistency, in OOD, when a developer implements an object, the developer makes sure that at any given moment state of object is consistent, and in order to have such control, the state of object should be unchanged by everyone but object itself. Every change of the object state must be controllable and comply with a predefined notion of consistency for a particular object. In another example, in many business applications, a client does not change the database directly, but rather creates and uses stored procedures that control database consistency and represent a semantic link between application and database.

Similarly, application state 108 exposes a personalized data object model, which may make sense only for a particular application object 100. This object model defines semantics and contract of interaction between application object 100 and application state 108. The object model guarantees consistency of state at any given moment. The state 108 is not just storage, but an active database with logic that ensures consistency of object model.

Interactions between application object 100 and application state 108 and between the operating system and application state 108 are two different things. The operating system works with state 108 as an opaque and integral type, not on level of values as with registry. It is opaque in this embodiment because the operating system and all other applications do not necessarily understand the semantics of a particular state; hence they should treat such state as opaque, without having ability to modify state.

The state 108 is separated and unreachable by any entity, except a predefined application. Only the predefined application object 100 may be able to modify state. Other entities treat state 108 as opaque, non-dividing integral type. Interaction between application object 100 and its application state 108 happens on a semantically correct and consistent data object model defined by state 108 itself. The state 108 guarantees the consistency of itself in terms defined by state 108.

The application state 108 is associated with application identity property 102 and, hence, is associated with application object 100 with the same identity property 102 because for other applications, the particular application state 108 does not have any semantic meaning.

The association of application identity property 102 with application state 108 is very important because only application object 100 knows semantics of application state 108 and only application object 100 associated with the particular application state 108 can modify it. Changes in any other applications' states do not affect state 108 of the identified application.

For application state 108, implementation has the following issues: application state schema support, content consistency validation logic support, data object model support, and backing storage support.

Treating application state 108 as an opaque object enables many scenarios, which allows implementing migration and roaming between same versions of same application. But many different versions of products exist and each version has it own definition of application state 108. There are categories of the same type of product, such as word processing applications that have similar semantic meaning from an application state perspective, while they likely have different application state object models. Both applications may have a similar purpose and similar, if not identical, features. This means application state 108 for each may have similar semantic meaning and overlaps. So there may be a number of settings that have the same meaning in both application states 108 (e.g., default font, default page layout, default language, default color). But the problem here is that they likely will have different object models and different meaning for application state consistency. Advantageously, embodiments of the present invention enable migration and roaming from one version to another and even between different products.

Every version of application object 100 works with a strictly defined object model of application state 108, which has very different semantics. Application state 108 objects from two different versions of the same application or even from different products may have semantic overlaps. If there are semantic overlaps between two application states, it enables possibility to define transformation from one application state 108 to another.

Similarly, aspects of the present invention are particularly beneficial to mobile computing. For example, a user installs an application on a mobile drive. The next day, the user I would like to use the application to compose document at a remote location. The application state 108 permits the user to validate the license and add shortcuts, change customization settings, etc. Even there is no trace of the user's application presence on the remote machine, the customization will be remembered for next use.

Moreover, application state 108 permits fully mobile storage, not only for documents, but full functional drive with installed applications -- or even better it may contain full operating system with applications that can be virtualized on a host operating system.

The application state 108 transformation means 'Data Object Model' transformation, so question here is, can we define transformation from one object model to another?

State transformation, or data object model transformation, is accomplished by deep understanding semantics of two involved application states 108 and, hence, cannot be done generically at operating system level. Further, such partial semantic mapping is feasible when application state 108 is a self-sufficient and independent object entity, from object model definition to consistency control. Application state 108, as an integral object with a defined set of responsibility, can describe the transformation between different application states 108. Application state 108 can declare a semantically correct and consistent transformation of settings from particular application state 108. Transformation can be fairly complicated, but nevertheless, transformation of data can be done, for example, by transformation technologies of XML and/or embedded and restricted .NET code.

Fully described application state 108 notions and properties, enable many new important scenarios. The state separation from application object 100 and operating system prevent damages to application state 108. Data object model and consistency rules keep state consistent even if the identified application has a bug in handling state data. Adding state transformation as a basic and imprescriptibly responsibility of application object 100 and providing necessary infrastructure for it, enable incredible scenarios such as migration and roaming between different versions and even between different products. The operating system and tools can work with application state 108 as with an opaque object. Scenarios like state migration and state roaming can work with state as an opaque object, which it means from implementation point of view is a very straightforward way to do it (simply copy operation and very deterministic minor logic for state association and disassociation).

Such an approach permits overcoming huge complexity, incompleteness and non-deterministic way of conventional migration, with a simple and straightforward way to make this happen. It is possible to make application state 108 migration using existing script engines.

The concept of application-based security emerges from the question, "Why should Application be able to do more than it supposed to do?" The goal of application-based security is to provide personalized access control and usage control by operating system to application. Conventional operating systems build a security context for an application based on current logged user. But since the security context does not have fine granularity, privileges for applications are often elevated unnecessarily. The user intuitively trusts that an application will not harm the operating system and/or applications. In contrast to the prior art, this embodiment of the invention prevents or at least monitors any side effects.

Personalized security context or application-based security context is a triple alliance of user context, application security declaration, and application policies. Application-based security has the properties of a dynamic security context that may vary for each application, not just static per logon user security context. Application-based security also involves the ability to handle dynamic request to change security policies and adapt to situational requirements on application granularity. Default application policies should prevent the application from harming the operating system and anything else on the system in any way, even for a user with "administrator" privileges.

The notion of security control subsequently extends notions of security context and security declaration. In addition to access control, security involves usage control. Access control is a system for controlling access to the operating system objects. It allows granting or denying or limiting access to operating system objects. But at the same time, access control does not allow controlling of how applications are using objects.

Access control is a concept that grants or denies the identified application ability to access a specific object of the operating system. But after granting access to the object, access control does not control in any way usage of the operating system object. It can be differentiated by three basic categories and can mostly rely today on ACL security concept: System (privileges, user context), Storage access (file system, registry, state, Winfs); and Networking (sockets).

Many users are part of admin groups on their working machines and they do most of their work with enabled admin privileges. Assigning the same security privileges as granted to a current user to a third party application without necessity should be avoided. The operating system should not provide more freedom to application than application requires. The operating system application policies may restrict security for unknown applications. If application object 100 and\or the application polices declaratively tell the operating system that it does not need a Networking, operating system should block ability of application to network access.

For example, the operating system should not allow application object 100 to change its binaries or any other application binaries as general policy. If system gets a virus, it likely will change application binaries. There are very few exceptions to applications that really need to have write access to applications binaries. Further to the example, Company A finds out that application B has flaw. While the flaw is under investigation, company A may revoke application B security policy or tighten up security context for application B, which would prevent application flaw from exploitation, but will have limited functionality, until client will get fix.

Usage control is a concept that allows qualitative control of different aspects of the operating system's object behavior and follows access being granted to the object. As it was mentioned above with respect to application behavior declaration, every application can describe its own behavior in terms defined by the operating system. Usage control is responsible for controlling and verifying terms as they defined in with respect to application behavior declaration, against current security context.

For example, application A has a read-only access right to some big file F. After granting access to file, application A intensively and constantly reads from file F, significantly decreasing disk I/O bandwidth and affecting CPU performance. Conventional operating systems are unable to restrict application A from taking most of the bandwidth. A small application with intense I/O can make a machine unresponsive for a period of time. Hence, there is a desire to introduce a usage control concept, which will help to raise operating system control to a new quality level. Usage control is technology to control usage of different behavioral aspects of operating system objects in terms defined by the object itself. For a traditional I/O object, it can be viewed as generalization of the quota concept.

The concept of usage control may be clarified with a file object example. For simplicity reasons, assume the file object supports "minimal bandwidth" and "maximal bandwidth" behavioral terms. The application's current security context is combination of application behavioral declarations, application policies, and user context. Current security context for application A has some concrete values for "minimal bandwidth" and "maximal bandwidth" terms, minb and maxb. Usage control will guarantee to application A "minimal bandwidth" minb for accessing file F and will guarantee to operating system, that application A will not exceed "maximal bandwidth" maxb. Also if the operating system would need, usage control can decrease "maximal bandwidth" up to "minimal bandwidth".

In yet another example, if an application requires reserving at least 10% of CPU usage (it can tell the operating system through metadata), the operating system can verify against its policies when deploying the application and can verify against current operating system state when executed. Such check is very useful, if Admin allocated 95% of CPU to SQL Server (5% reserved for other applications, like SQL Management applet), then it does not make sense to even deploy the application.

Another aspect of the invention involves formal verification. Application object 100 preferably has as complete as possible declaration of further intentions. The operating system responsibility is to formally verify, if the particular application's manifest (i.e., set of declarations) is compliant with the operating system's application policies. For example, if application 'ABC' reports user related data back to the company, the application is required to declare that particular intention, so it could be formally verified against the application policies, otherwise a default policy that is more strict should apply.

Formal verification is essentially a law enforcement engine for the operating system, where laws defined by application policies are enforced when application object 100 installs and\or during application execution, based on application metadata property 106. It allows detecting and resolving problems before they actually would happen. Formal verification can happen during installation, before and during application object 100 execution.

For example, if an application requires reserving at least 10% of CPU usage, the operating system can verify that against policies when deploying application and verify against current security context when executed. But if at same time SQL Server is running with allocated 95% of CPU, then it does not make much sense to execute or even deploy application. Resource allocation conflict can be detected before executing and even before installation.

Referring now to application policies and management, application object 100 metadata property 106 describes a different aspect of the application in terms defined by the operating system. One type of such terms can minimal and maximal requirements to specific aspect of the operating system object. The operating system may have number of such variables, which define and describe different aspects of the operating system. The set of all variable, notions, and rules that define nature of operating system must be regulated. Values and range for those variables must be regulated, because it may be difficult to recalculate and assigned const values to those variables. So it is desired to have a operating system terms and rules management concept that monitors and adjust those variables and define rules on those variables. Such a concept is "application policies".

For example, one rule can be for application A to close access to port B, and this rule can be created by user or delivered by servicing to mitigate some problem within Application A until the problem is fixed.

Those policies can describe minimal requirements to the application to be installed or executed on the operating system. Those policies can check a predefined list before installing or executing an application. Those policies can define and enforce very flexible rules for operating system and customer benefits. Application policies define what must be tracked, controlled, audited, and verified by the operating system.

Application policies do not change the notions and laws of the operating system, but they define base values for the operating system the same way as a Constitution does not change laws of nature, but adds additional rules to vital functions of society for only reason to bring additional benefits to society.

For example; Admin would like to open only one port for application usage. Any application that requires different port would be rejected to execute or even install. Further, Admin would like operating system to log event, every time application ABC access port X or every time it approaches to threshold of network/disk bandwidth consumption.

One major advance of a 32-bit operating system is memory isolation at process level. Binary, state, security, and policy isolation at application level is also an important advance. Absence of definition and absence of enforcement from the operating system is a direct result of the complicated and expensive problems for conventional operating systems. In this regard, aspects of the present invention permit the operating system to bring application abstraction, i.e., application object 100, under operating system cover and to be responsible for definition of application object abstraction and its advancements. This permits the operating system to be responsible for secure and controllable execution of applications.

In general, embodiments of the invention introduce the abstraction of application object 100 at the operating system level as a core concept. With introduction of such abstraction, boundaries of application object 100 and its major aspects, like application state, security, and the like are clearly outlined. Application security and state are two main points that help overcome deficiencies in the prior art. The model of application state 108 enables a deterministic and straightforward way for migration, upgrade, roam, backup, and mobile application scenarios. Introduction of a flexible security model permits a secure and trusted runtime environment based on these new concepts, namely, declarative behavioral model, application-based security, formal verification, and application policies (all described below), which provide basis for very flexible application management.

Integral application object 100 abstraction enables relatively easy extensibility by new supportive technologies (e.g., licensing, servicing, and error reporting). Extending responsibilities of application object 100 affects applications immediately after the abstraction feature is deployed, without the identified application itself knowing about it. For example, general licensing support as part of application object 100 responsibilities would affect all applications by design. For example, a software rental company can control application lifetimes through a licensing extension set up by a clerk upon renting a specific application.

As described in detail below, unification of the application concept allows introduction of application state 108, which defines a model for the identified application as a separate and integral entity based on several concepts (e.g., data object model, state consistency, state separation, and state transformation or object model transformation). Moreover, a declarative behavioral model according to embodiments of the invention provides a formal declaration of behavioral aspects of the identified application. Application-based security is a personalized security context for the identified application. Aspects of security control include access control and usage control, which is a control engine for the declarative behavioral model. Formal verification includes formally verifying different behavioral aspects of the identified application, before installation, and before and during execution. In one embodiment, application policy is an engine that creates and manages laws for determining operating system environment for applications.

Aspects of the invention involve basic technologies that the application object 100 abstraction builds, such as:
- Application Management and Policies.
- Migration, Roaming and Backup support
- Application packaging and delivering
- Application deployment

Application deployment may be a prerogative of the operating system only. Application physical representation, in general, is an implementation detail; it may be a single package that provides its own file\state namespaces and in which the operating system could look inside using application identity property 102 as a re-parse point, or deployment at an application repository\database.

Responsibilities of the application object 100 abstraction include:
- Deployment/Remove
- Discoverability - allows find deployed application and retrieves detailed information about them.
- Serviceability - every application naturally must be serviceable by definition as it naturally for application to being deployed.
- Execution - application must have at least one or more executable entries.
- Copy/Move - application must to be mobile, meaning that copying an application is just deployment of another instance of application including its state.
- State Reset/Association/Disassociation - ability to associate and disassociate state from particular application is very important and vital for next scenarios like: Migration, Roaming, Backup, Mobile Applications, and Distributive state.
- Distributive State - where real state storage can be presented as a Web Service and the operating system can associate such state storage to any application, which would enable global roaming.

Every application object 100 inherits those responsibilities by design. Realization of those responsibilities is governed mostly by metadata property 106 supplied as part of application.

In one or more embodiments of the invention, the identified application has the following properties:
- Lifetime of application object 100 is independent from operating system lifetime (any change in operating system must not affect application in any way).
- Lifetime of application state 108 is independent from operating system lifetime and from application object 100 lifetime.
- Ability to have multiple deployments of same application, on same physical machine and same operating system.
- Every operation must be transaction based.

For example, embodiments of the invention facilitate application migration between computers while maintaining the application's state (i.e., its settings). If an application has a single-user license, for instance, a user may wish for the license to be moved with the application to a different machine or at least have the application be put in a state that permits easily acquiring a license on the different machine. In this example, the invention allows the operating system, rather than the application itself, to maintain licensing support.

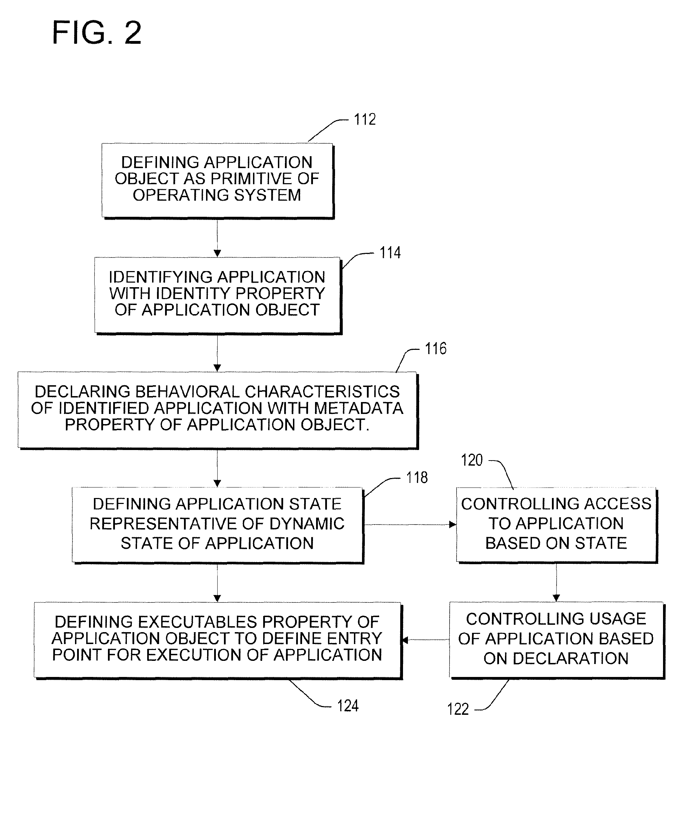

Referring now to FIG. 2, a flow diagram illustrates exemplary operations for managing an application associated with an operating system. Beginning at 112, an application object is defined as a primitive of the operating system. At 114, an identity property of the application object identifies the application. The illustrated embodiment of the invention, at 116, declares behavioral characteristics of the identified application, (e.g., mass storage; networking; process; resource scheduling; memory) with a metadata property of the application object. The metadata property of the application object defines the application's responsibilities. Advantageously, the operating system can verify whether the application's declared behavioral characteristics comply with operating system requirements. At 118, an application state representative of a dynamic state of the identified application is defined independently of other applications. In this instance, the application state is a data object model, which defines semantics of an interaction between the application object and the application state. This permits embodiments of the invention to control access to the identified application based on the dynamic state thereof represented by the application state at 120 and to control usage of the identified application according to the declared behavioral characteristics of the identified application at 122 when access is granted. Moreover, embodiments of the invention permit upgrading the application; roaming the application from one computer to another; backing up the application; executing the application on a remote computer, and the like according to the application state of the identified application. At 124, an entry point for execution of the application is defined with an executables property of the application object. The executables property includes static data representing one or more binaries of the identified application in one embodiment of the invention.

FIG. 3 shows one example of a general purpose computing device in the form of a computer 130. In one embodiment of the invention, a computer such as the computer 130 is suitable for use in the other figures illustrated and described herein. Computer 130 has one or more processors or processing units 132 and a system memory 134. In the illustrated embodiment, a system bus 136 couples various system components including the system memory 134 to the processors 132. The bus 136 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computer 130 typically has at least some form of computer readable media. Computer readable media, which include both volatile and nonvolatile media, removable and non-removable media, may be any available medium that may be accessed by computer 130. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. For example, computer storage media include RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium that may be used to store the desired information and that may be accessed by computer 130. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Wired media, such as a wired network or direct-wired connection, and wireless media, such as acoustic, RF, infrared, and other wireless media, are examples of communication media. Combinations of any of the above are also included within the scope of computer readable media.

The system memory 134 includes computer storage media in the form of removable and/or non-removable, volatile and/or nonvolatile memory. In the illustrated embodiment, system memory 134 includes read only memory (ROM) 138 and random access memory (RAM) 140. A basic input/output system 142 (BIOS), including the basic routines that help to transfer information between elements within computer 130, such as during start-up, is typically stored in ROM 138. RAM 140 typically includes data and/or program modules that are immediately accessible to and/or presently being operated on by processing unit 132. By way of example, and not limitation, FIG. 3 illustrates operating system 144, application programs 146, other program modules 148, and program data 150.

The computer 130 may also include other removable/non-removable, volatile/nonvolatile computer storage media. For example, FIG. 3 illustrates a hard disk drive 154 that reads from or writes to non-removable, nonvolatile magnetic media. FIG. 3 also shows a magnetic disk drive 156 that reads from or writes to a removable, nonvolatile magnetic disk 158, and an optical disk drive 160 that reads from or writes to a removable, nonvolatile optical disk 162 such as a CD-ROM or other optical media. Other removable/non-removable, volatile/nonvolatile computer storage media that may be used in the exemplary operating environment include, but are not limited to, magnetic tape cassettes, flash memory cards, digital versatile disks, digital video tape, solid state RAM, solid state ROM, and the like. The hard disk drive 154, and magnetic disk drive 156 and optical disk drive 160 are typically connected to the system bus 136 by a non-volatile memory interface, such as interface 166.

The drives or other mass storage devices and their associated computer storage media discussed above and illustrated in FIG. 3, provide storage of computer readable instructions, data structures, program modules and other data for the computer 130. In FIG. 3, for example, hard disk drive 154 is illustrated as storing operating system 170, application programs 172, other program modules 174, and program data 176. Note that these components may either be the same as or different from operating system 144, application programs 146, other program modules 148, and program data 150. Operating system 170, application programs 172, other program modules 174, and program data 176 are given different numbers here to illustrate that, at a minimum, they are different copies.

A user may enter commands and information into computer 130 through input devices or user interface selection devices such as a keyboard 180 and a pointing device 182 (e.g., a mouse, trackball, pen, or touch pad). Other input devices (not shown) may include a microphone, joystick, game pad, satellite dish, scanner, or the like. These and other input devices are connected to processing unit 132 through a user input interface 184 that is coupled to system bus 136, but may be connected by other interface and bus structures, such as a parallel port, game port, or a Universal Serial Bus (USB). A monitor 188 or other type of display device is also connected to system bus 136 via an interface, such as a video interface 190. In addition to the monitor 188, computers often include other peripheral output devices (not shown) such as a printer and speakers, which may be connected through an output peripheral interface (not shown).

The computer 130 may operate in a networked environment using logical connections to one or more remote computers, such as a remote computer 194. The remote computer 194 may be a personal computer, a server, a router, a network PC, a peer device or other common network node, and typically includes many or all of the elements described above relative to computer 130. The logical connections depicted in FIG. 3 include a local area network (LAN) 196 and a wide area network (WAN) 198, but may also include other networks. LAN 136 and/or WAN 138 may be a wired network, a wireless network, a combination thereof, and so on. Such networking environments are commonplace in offices, enterprise-wide computer networks, intranets, and global computer networks (e.g., the Internet).

When used in a local area networking environment, computer 130 is connected to the LAN 196 through a network interface or adapter 186. When used in a wide area networking environment, computer 130 typically includes a modem 178 or other means for establishing communications over the WAN 198, such as the Internet. The modem 178, which may be internal or external, is connected to system bus 136 via the user input interface 184, or other appropriate mechanism. In a networked environment, program modules depicted relative to computer 130, or portions thereof, may be stored in a remote memory storage device (not shown). By way of example, and not limitation, FIG. 3 illustrates remote application programs 192 as residing on the memory device. The network connections shown are exemplary and other means of establishing a communications link between the computers may be used.

Generally, the data processors of computer 130 are programmed by means of instructions stored at different times in the various computer-readable storage media of the computer. Programs and operating systems are typically distributed, for example, on floppy disks or CD-ROMs. From there, they are installed or loaded into the secondary memory of a computer. At execution, they are loaded at least partially into the computer's primary electronic memory. Embodiments of the invention described herein include these and other various types of computer-readable storage media when such media include instructions or programs for implementing the steps described below in conjunction with a microprocessor or other data processor. One embodiment of the invention also includes the computer itself when programmed according to the methods and techniques described herein.

For purposes of illustration, programs and other executable program components, such as the operating system, are illustrated herein as discrete blocks. It is recognized, however, that such programs and components reside at various times in different storage components of the computer, and are executed by the data processor(s) of the computer.

Although described in connection with an exemplary computing system environment, including computer 130, one embodiment of the invention is operational with numerous other general purpose or special purpose computing system environments or configurations. The computing system environment is not intended to suggest any limitation as to the scope of use or functionality of embodiments of the invention. Moreover, the computing system environment should not be interpreted as having any dependency or requirement relating to any one or combination of components illustrated in the exemplary operating environment. Examples of well known computing systems, environments, and/or configurations that may be suitable for use with the embodiments of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the invention may be described in the general context of computer-executable instructions, such as program modules, executed by one or more computers or other devices. Generally, program modules include, but are not limited to, routines, programs, objects, components, and data structures that perform particular tasks or implement particular abstract data types. Embodiments of the invention may also be practiced in distributed computing environments where tasks are performed by remote processing devices that are linked through a communications network. In a distributed computing environment, program modules may be located on both local and remote computer storage media including memory storage devices.

An interface in the context of a software architecture includes a software module, component, code portion, or other sequence of computer-executable instructions. The interface includes, for example, a first module accessing a second module to perform computing tasks on behalf of the first module. The first and second modules include, in one example, application programming interfaces (APIs) such as provided by operating systems, component object model (COM) interfaces (e.g., for peer-to-peer application communication), and extensible markup language metadata interchange format (XMI) interfaces (e.g., for communication between web services).

The interface may be a tightly coupled, synchronous implementation such as in Java 2 Platform Enterprise Edition (J2EE), COM, or distributed COM (DCOM) examples. Alternatively or in addition, the interface may be a loosely coupled, asynchronous implementation such as in a web service (e.g., using the simple object access protocol). In general, the interface includes any combination of the following characteristics: tightly coupled, loosely coupled, synchronous, and asynchronous. Further, the interface may conform to a standard protocol, a proprietary protocol, or any combination of standard and proprietary protocols.

The interfaces described herein may all be part of a single interface or may be implemented as separate interfaces or any combination therein. The interfaces may execute locally or remotely to provide functionality. Further, the interfaces may include additional or less functionality than illustrated or described herein.

In operation, computer 130 executes computer-executable instructions such as those described herein to manage applications associated with operating system 144, 170 by defining an application object 100 as a primitive of the operating system. An identity property 102 of the application object 100 identifies at least one application associated with the operating system and a metadata property 106 property of the application object 100 declares behavioral characteristics of the identified application. An application state representative of a dynamic state of the identified application defines semantics of an interaction between the application object 100 and the application state.

The order of execution or performance of the methods illustrated and described herein is not essential, unless otherwise specified. That is, it is contemplated by the inventors that elements of the methods may be performed in any order, unless otherwise specified, and that the methods may include more or less elements than those disclosed herein. For example, it is contemplated that executing or performing a particular element before, contemporaneously with, or after another element is within the scope of the invention.

When introducing elements of the present invention or the embodiments thereof, the articles "a," "an," "the," and "said" are intended to mean that there are one or more of the elements. The terms "comprising," "including," and "having" are intended to be inclusive and mean that there may be additional elements other than the listed elements.

In view of the above, it will be seen that the several objects of the invention are achieved and other advantageous results attained.

As various changes could be made in the above constructions and methods without departing from the scope of embodiments of the invention, it is intended that all matter contained in the above description and shown in the accompanying drawings shall be interpreted as illustrative and not in a limiting sense.

## Claims

1. A method of managing one or more applications associated with an operating system, said method comprising:
defining an application object as a primitive of the operating system;
identifying at least one of the applications with an identity property of the application object; and
declaring behavioral characteristics of the identified application with a metadata property of the application object.

2. The method of claim 1, further comprising defining an application state representative of a dynamic state of the identified application.

3. The method of claim 2, wherein the application state comprises a data object model defining semantics of an interaction between the application object and the application state.

4. The method of claim 2, wherein defining the application state of the identified application comprises defining the application state of the identified application independently of other applications.

5. The method of claim 2, further comprising controlling access to the identified application based on the dynamic state thereof represented by the application state.

6. The method of claim 5, further comprising controlling usage of the identified application according to the declared behavioral characteristics of the identified application when access is granted.

7. The method of claim 2, further comprising transforming the application state of the identified application to an application state of another application.

8. The method of claim 2, further comprising performing one or more of the following according to the application state of the identified application: upgrading the application; roaming the application from one computer to another; backing up the application; and executing the application on a remote computer.

9. The method of claim 1, further comprising verifying, by the operating system, whether the declared behavioral characteristics of the identified application comply with operating system requirements.

10. The method of claim 1, wherein the metadata property of the application object specifies one or more application policies defining requirements of the identified application for execution on the operating system.

11. The method of claim 1, further comprising defining an entry point for execution of the identified application with an executables property of the application object, said executables property including static data representing one or more binaries of the identified application.

12. The method of claim 1, further comprising defining responsibilities of the identified application with the metadata property of the application object.

13. The method of claim 1, wherein the declared behavioral characteristics of the identified application include one or more of the following characteristics: mass storage; networking; process; resource scheduling; and memory.

14. The method of claim 1, wherein one or more computer-readable media have computer-executable instructions for performing the method recited in claim 1.

15. One or more computer-readable media having stored thereon a data structure comprising:
an identity property of an application object, said application object being a primitive of an operating system, said identity property identifying at least one application associated with the operating system;
a metadata property of the application object, said metadata property declaring behavioral characteristics of the identified application; and
an application state representative of a dynamic state of the identified application.

16. The computer-readable media of claim 15, further comprising an executables property of the application object defining an entry point for execution of the identified application.

17. The computer-readable media of claim 16, wherein the executables property includes static data representing one or more binaries of the identified application.

18. The computer-readable media of claim 15, wherein the metadata property of the application object includes data defining responsibilities of the identified application.

19. A method of managing one or more applications associated with an operating system, said method comprising:
defining an application object as a primitive of the operating system;
identifying at least one of the applications with an identity property of the application object; and
defining an application state representative of a dynamic state of the identified application, said application state defining semantics of an interaction between the application object and the application state.

20. The method of claim 19, further comprising declaring behavioral characteristics of the identified application with a metadata property of the application object.
